(19) **Europäisches Patentamt**

**European Patent Office**

**Office européen des brevets**

(11) **EP 0 780 253 B1**

(12) **FASCICULE DE BREVET EUROPEEN**

(45) Date de publication et mention
de la délivrance du brevet:
**24.01.2001 Bulletin 2001/04**

(51) Int Cl.⁷: **B60H 1/00**

(21) Numéro de dépôt: **96402706.4**

(22) Date de dépôt: **12.12.1996**

(54) **Installation de climatisation, notamment d'un véhicule automobile**

Klimaanlage, insbesondere für Kraftwagen

Air conditioner, especially for a motor vehicle

(84) Etats contractants désignés:
**DE ES GB IT**

(30) Priorité: **22.12.1995 FR 9515423**

(43) Date de publication de la demande:
**25.06.1997 Bulletin 1997/26**

(73) Titulaire: **VALEO CLIMATISATION**
**78321 La Verrière (FR)**

(72) Inventeurs:
• **Karl, Stefan**
**75015 Paris (FR)**
• **Gach, Béatrice**
**78960 Voisins le Bretonneux (FR)**

(56) Documents cités:
**EP-A- 0 026 612**     **EP-A- 0 194 029**
**DE-A- 3 624 171**

**Description**

L'invention concerne une installation de climatisation, notamment d'un véhicule automobile, et plus particulièrement les éléments responsables de la régulation automatique de cette installation.

On connaît dans le domaine de l'automobile, un type d'installation de climatisation comprenant :

- un compresseur à pression réglable,
- un volet d'entrée d'air à position réglable, propre à gérer la proportion d'air recirculé et/ou d'air extérieur,
- un premier capteur propre à délivrer une première mesure représentative de la température à l'intérieur de l'habitacle,
- un second capteur propre à délivrer une seconde mesure représentative de la température à l'extérieur de l'habitacle,
- des moyens de saisie propres à mémoriser une température de consigne saisie par un passager,
- des moyens de traitement propres à calculer un écart de température entre la premihre mesure et la température de consigne saisie, et
- des moyens de commande propres à agir sur le compresseur en fonction de la seconde mesure et de l'écart de température calculé.

Lorsque le véhicule est exposé longtemps au soleil, un effet de serre provoque, d'une part, une forte augmentation de la température à l'intérieur de l'habitacle par rapport à la température à l'extérieur de celui-ci, et d'autre part, si l'exposition dure longtemps, une augmentation de l'humidité absolue de l'air dans l'habitacle par rapport à celle de l'air extérieur à celui-ci.

Dans les installations du type décrit précédemment, la régulation de température est réalisée par variation d'un unique paramètre : la pression du compresseur. Le volet d'entrée d'air ne peut être manoeuvré par les moyens de commande, au moins au début de la régulation. Il est donc en position fermée (l'air extérieur ne pouvant pas rentrer). En conséquence, l'air qui doit être refroidi provient de l'intérieur de l'habitacle. Etant plus chaud, voire beaucoup plus chaud, et généralement beaucoup plus humide que celui qui se trouve à l'extérieur de l'habitacle, il faut donc plus de temps, voire beaucoup plus, pour refroidir cet air recirculé que pour refroidir l'air extérieur.

De telles installations ont donc des difficultés à réguler rapidement l'aérothermie à l'intérieur de l'habitacle, lorsque l'écart de température entre l'intérieur et l'extérieur de l'habitacle est important, ce qui nuit notablement au confort des passagers.

Par ailleurs, il est connu, notamment par le document EP 0 026612 (correspondant au préambule de la revendication 1), une méthode de contrôle du compresseur pour une installation de climatisation. Cette méthode permet l'activation et la désactivation du compresseur en fonction de la température mesurée à l'intérieur de l'habitacle à intervalle de temps régulier.

En conséquence, un but de l'invention est de procurer une installation de climatisation du type défini en introduction, qui ne présente pas tout ou partie des inconvénients des installations de la technique antérieure, et notamment pendant la phase initiale de régulation dite d'amorçage.

L'invention propose à cet effet une installation dans laquelle, d'une part, les moyens de traitement comprennent des moyens de mémorisation propres à mémoriser au moins un premier seuil de température, et des moyens de comparaison propres à effectuer une première comparaison entre ledit premier seuil de température et la valeur absolue de l'écart de température calculé, puis à effectuer une seconde comparaison entre les températures intérieure et extérieure et d'autre part, les moyens de commande sont propres à positionner le volet d'entrée d'air en fonction au moins de ces première et seconde comparaisons, ce qui permet de réguler la température à l'intérieur de l'habitacle.

Selon une autre caractéristique de l'invention, le volet d'entrée d'air peut prendre au moins deux positions choisies parmi une position ouverte dans laquelle seul l'air extérieur est autorisé à entrer dans ladite installation et une position fermée dans laquelle seul l'air recirculé est autorisé à entrer dans ladite installation.

Ainsi, suivant le résultat de la seconde comparaison, ou en d'autres termes selon que la température interne est supérieure ou inférieure à la température externe, on positionne automatiquement le volet d'entrée d'air de sorte que l'air traité par l'installation soit de l'air recirculé, de l'air extérieur, ou éventuellement un mélange des deux airs.

Avantageusement, les première et seconde comparaisons effectuées par les moyens de comparaison consistent en des soustractions que l'on peut réaliser simplement à l'aide de soustracteurs électroniques.

Dans un mode de réalisation préféré de l'invention, on prévoit également un troisième capteur propre à délivrer une troisième mesure représentative de l'humidité absolue de l'air à l'intérieur de l'habitacle, et un quatrième capteur propre à délivrer une quatrième mesure représentative de l'humidité absolue de l'air à l'extérieur de l'habitacle. De plus, les moyens de comparaison des moyens de traitement sont aptes à effectuer une troisième comparaison entre les troisième et quatrième mesures.

Dans ce mode de réalisation, d'une première part, les moyens de mémorisation des moyens de traitement sont également propres à mémoriser un second seuil de température et un seuil d'humidité, d'une seconde part, les moyens de comparaison sont aptes, après avoir effectué les première, seconde et troisième comparaisons, à effectuer une quatrième comparaison entre la valeur absolue du résultat de la troisième comparaison et ledit seuil d'humiditi, à effectuer une cinquième comparaison entre la valeur absolue du résultat de la seconde comparaison et ledit second seuil de température, à effectuer au moins deux opérations sur respectivement les valeurs absolues des résultats des seconde et troisième comparaisons, et à effectuer une sixième comparaison entre les résultats des deux opérations, et d'une troisième part, les moyens de commande sont aptes à positionner le volet d'entrée d'air en fonction de ces première à sixième comparaisons, ce qui permet de réguler également le taux d'humidité à l'intérieur de l'habitacle.

Cela permet de réguler non seulement la température, mais aussi le taux d'humidité à l'intérieur de l'habitacle.

Avantageusement, les troisième, quatrième, cinquième et sixième comparaisons effectuées par les moyens de comparaison consistent en des soustractions, que l'on peut simplement réaliser avec des soustracteurs électroniques.

Selon l'invention, on peut prévoir plusieurs modes d'interrogation des capteurs par les moyens de traitement. Un premier mode dans lequel on interroge les premier, second, troisième et quatrième capteurs en même temps. Un second mode dans lequel on interroge les premier, second, troisième et quatrième capteurs successivement. Et un troisième mode dans lequel on interroge les premier et second capteurs en un premier temps, puis les troisième et quatrième capteurs en un second temps, ou inversement.

Dans le premier mode, le traitement des mesures est effectué en parallèle, grâce par exemple à une interface parallèle, ce qui permet de minimiser le temps de traitement et donc le temps nécessaire au choix de la position du volet d'entrée d'air. En revanche, dans le second mode, on peut utiliser une interface série, ou une entrée-sortie unique, l'interrogation d'un capteur et le traitement de sa mesure ne pouvant être effectués qu'après traitement de la mesure précédente. Le troisième mode est un mode intermédiaire.

De la sorte, l'installation peut être adaptée à différentes séries plus ou moins évoluées, dans lesquelles le traitement des mesures, issues des différents capteurs, sera effectué soit en série, soit en parallèle.

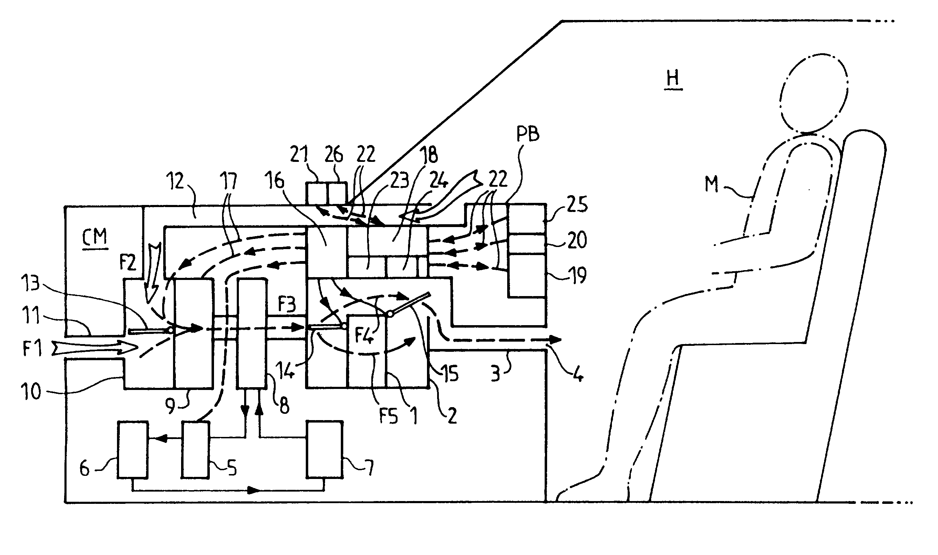

Dans la description qui suit, faite à titre d'exemple, on se réfère à l'unique figure qui illustre, en vue en coupe schématique, un véhicule équipé de l'installation selon l'invention, dans un mode préférentiel de réalisation.

L'installation de climatisation constitue la branche dite froide d'une installation de chauffage et climatisation de l'habitacle H d'un véhicule automobile, laquelle est logée dans le compartiment moteur CM et sous la planche de bord PB, laquelle comprend également une branche dite chaude comprenant un radiateur de chauffage 1 logé dans un boîtier de chauffage et distribution d'air 2 destiné à distribuer l'air traité dans des conduits 3 débouchant dans l'habitacle H au niveau de bouches de distribution 4.

La branche froide de climatisation comporté notamment un compresseur 5 à pression réglable destiné à comprimer un fluide frigorigène sous forme de gaz chaud, un condenseur 6 destiné à condenser le gaz chaud comprimé sous forme de liquide chaud, un détendeur 7 destiné à détendre le liquide chaud sous forme de liquide/gaz froid, et un évaporateur 8 destiné à transformer le liquide/gaz froid en gaz froid, qui est alors retourné au compresseur 5, afin de refroidir de l'air qui le traverse.

Cet air est issu d'un pulseur 9 à débit variable qui est lui-même alimenté par une chambre d'alimentation 10 dans laquelle débouchent un premier conduit 11 chargé d'acheminer l'air extérieur (flèche F1) et un second conduit 12 chargé d'acheminer l'air recirculé issu de l'habitacle (flèche F2).

La chambre d'alimentation 10 comprend un premier volet d'entrée d'air 13 piloté par un actionneur de type électromécanique ou pneumatique et permettant de régler le pourcentage d'air extérieur et/ou d'air recirculé devant être traité soit par la boucle froide, soit par la boucle chaude.

L'air issu de la chambre d'alimentation 10 pénètre donc dans le pulseur 9, traverse l'évaporateur 8, puis débouche dans le boîtier 2, selon la flèche F3, lequel comprend un second volet de répartition d'air 14 piloté par un actionneur de type électromécanique ou pneumatique et permettant de régler le pourcentage d'air traité froid (flèche F4) ou à traiter par réchauffement (flèche F5) en vue, soit de leur distribution directe dans l'habitacle H, soit de leur mélange avant ladite distribution. A cet effet, le boîtier 2 comprend en aval du radiateur de chauffage 1 un volet de mélange d'air traité 15 piloté par un actionneur de type électromécanique ou pneumatique et permettant de régler le pourcentage du mélange d'air traité froid et d'air traité chaud.

Les actionneurs des différents volets 13-15 et le pulseur 9 sont commandés et gérés par des moyens de commande 16, réalisés à base de composants électroniques parfaitement connus de l'homme de l'art, lesquels moyens leur adressent des ordres au moyen des câbles 17.

Ces moyens de commande 16 reçoivent euxmêmes des ordres (ou messages) de moyens de traitement 18, sur lesquels on reviendra plus loin, et de moyens de saisie 19 qui sont généralement pourvus de boutons poussoirs ou rotatifs ou à réglette, ainsi que de touches permettant la saisie par un utilisateur M de paramètres aérothermiques, comme par exemple la température de consigne en un lieu donné de l'habitacle.

Les moyens de traitement 18 et les moyens de commande 16 sont logés sous la planche de bord PB ou dans le compartiment moteur CM à l'avant du véhicule V.

Les moyens de saisie 19 comportent de préférence une mémoire destinée à mémoriser les paramètres saisis, sous forme de consigne, et notamment la température de consigne qui sert à la régulation.

Cette régulation nécessite, également, au moins deux autres paramètres qui sont la température à l'intérieur de l'habitacle T1 et la température à l'extérieur de l'habitacle T2.

Ces paramètres sont obtenus à l'aide respectivement de premier 20 et second 21 capteurs qui sont connectés aux moyens de traitement 18 par des câbles 22 pouvant autoriser des liaisons bidirectionnelles.

Bien entendu, on pourrait envisager une liaison sans fil entre les capteurs et les moyens de traitement.

Chaque capteur est de préférence un capteur de température qui délivre une mesure Ti représentative de la température où il est implanté sous forme de signaux électriques.

Mais il est clair qu'un autre type de capteur pourrait être utilisé, comme par exemple un capteur de flux thermique.

Les moyens de traitement 18 réceptionnent ces signaux électriques, puis les mettent éventuellement en forme afin de pouvoir en effectuer une comparaison avec la température de consigne ou bien avec d'autres mesures de température ou autre. Une telle mise en forme peut être par exemple un simple filtrage passe bande permettant de supprimer ou d'atténuer des signaux parasites, mais cela peut être également une conversion de type analogique-numérique à l'aide d'un convertisseur CAN.

De préférence, chaque signal mis en forme est stocké dans une mémoire 24 en vue de son utilisation ultérieure, et notamment pour des comparaisons de type soustraction réalisées par des composants électroniques de type soustracteur électronique 23 à deux entrées et une sortie. Le résultat de 5 la soustraction peut être délivré sous la forme d'une différence de potentiel (tension) ou d'un courant dont l'intensité est proportionnelle au résultat de la soustraction. Dans cet exemple de réalisation une tension est préférable car elle possède non seulement une amplitude, mais également un signe (positif ou négatif).

Dans sa version la plus simple, l'installation proposée ne comprend que les deux capteurs de température 20 et 21 lesquels sont respectivement implantés dans l'habitacle et sur la face externe de la carrosserie du véhicule en un endroit protégé.

Son mode de fonctionnement préféré est donné ci-dessous.

L'utilisateur M qui vient de s'installer dans le véhicule effectue la saisie d'une température de consigne TC à l'aide des moyens de saisie 19 qui adressent alors TC aux moyens de traitement 18, lesquels la mémorisent dans la mémoire 24.

Les moyens de traitement 18, avertis par la réception de TC d'un besoin de régulation de température, interrogent alors les deux capteurs de température 20 et 21. Cette interrogation est effectuée soit simultanément si l'installation est équipée d'une interface moyens de traitement-capteurs de type parallèle, soit en deux temps si l'installation est équipée d'une interface de type série.

Les deux mesures T1 et T2, issues respectivement des premier 20 et second 21 capteurs, sont alors mémorisées dans la mémoire 24 des moyens de traitement après une éventuelle mise en forme, comme indiqué précédemment.

Cette mémoire 24 contient également une partie de type réinscriptible contenant un seuil de température S1, lequel est plus exactement un seuil limite d'écart de température en deça duquel on considère que l'objectif de la régulation est atteint. Ce seuil est stocké dans la mémoire avant l'installation des moyens de traitement dans le véhicule. Mais, on peut envisager que ce seuil soit remplaçable par un autre seuil. Dans cette hypothèse, les moyens de traitement doivent comprendre une entrée-sortie permettant leur raccordement à une unité de programmation de type micro-ordinateur portable.

A réception de la mesure de température interne T1, les moyens de traitement 18 effectuent une première soustraction entre TC et T1, ce qui fournit un premier écart de température E1, qui est mémorisé dans la mémoire 24 à un endroit prédéfini. Puis les moyens de traitement 18 effectuent une première comparaison entre le seuil S1 et la valeur absolue de l'écart E1. Cette comparaison consiste également en une soustraction.

On effectue ensuite, ou simultanément, une seconde comparaison entre les températures interne T1 et externe T2. Cette comparaison consiste également en une soustraction.

En fonction des résultats des première et seconde comparaisons, les moyens de traitement 18 sont aptes à adresser aux moyens de commande 16 un message leur demandant d'agir sur le volet d'entrée d'air 13, en positionnant celui-ci soit dans une position ouverte dans laquelle seul de l'air extérieur peut être traité par l'installation, soit dans une position fermée dans laquelle seul de l'air recirculé peut être traité par l'installation. L'ouverture du volet aura tendance à abaisser rapidement la température interne, ainsi que son taux d'humidité absolue, lorsque la température interne est plus élevée que la température externe. Mais, dans cette forme simple de réalisation, on ne peut pas contrôler précisément le taux d'humidité interne.

Deux grands cas se présentent.

I) Si la condition "S1 - E1 < 0" est vérifiée, alors l'écart de température entre la consigne TC et la température interne T1 est supérieur au seuil limite (T1 $\neq$ TC), ce qui veut dire que l'objectif de la régulation n'est pas atteint, la régulation est dans une phase dite d'amorçage. Deux cas se présentent alors :

a) si la condition "T1 - T2 > 0" est vérifiée, alors il faut traiter l'air extérieur plutôt que l'air intérieur recirculé, puisque le premier est moins chaud que le second. En conséquence il faut ouvrir le volet d'entrée d'air 13;

b) si la condition "T1 - T2 < 0" est vérifiée, alors il faut traiter l'air intérieur recirculé plutôt que l'air extérieur, puisque le premier est moins chaud que le second. En conséquence, il faut fermer le volet d'entrée d'air 13.

Dans ce premier grand cas, le message adressé par les moyens de traitement 18 aux moyens de commande 16, après traitement de la série de mesure, leur indique qu'il faut, d'une part, positionner le volet d'entrée d'air 13 dans la position ouverte ou fermée, et d'autre part, qu'il faut mettre en route la boucle froide, au maximum de ses possibilités, c'est à dire en demandant au compresseur de fonctionner à pression maximale.

II) Si la condition "S1 - E1 > 0" est vérifiée, alors l'écart de température entre la consigne et la température interne est inférieur au seuil limite (T1 ≈ TC), ce qui veut dire que l'objectif de la régulation est atteint, la régulation est dans sa phase dite stabilisée. En conséquence, quel que soit le résultat de la seconde comparaison, il faut fermer le volet d'entrée d'air 13.

Dans ce second grand cas, le message adressé par les moyens de traitement 18 aux moyens de commande 16 leur indique qu'il faut, d'une part, positionner le volet d'entrée d'air 13 dans la position fermée, et d'autre part, qu'il faut mettre en route la boucle froide, en utilisant une pression de compresseur calculée en fonction d'une table de correspondance qu'elle contient et de l'écart de température entre TC et T1.

Dans tous les cas, un traitement complet d'une série de mesures (T1 et T2) par les moyens de traitement 18 et l'action des moyens de commande 16 constituent un cycle de commande de régulation.

Après un cycle de commande de régulation et une période d'adaptation de durée prédéfinie au cours de laquelle on régule à réglages constants, les moyens de traitement 18 sont aptes à effectuer un nouveau cycle de commande de régulation, lequel commencera par une nouvelle interrogation des capteurs et s'achèvera par un ordre nouveau ou identique adressé au volet d'entrée d'air 13 afin qu'il modifie ou conserve son précédent positionnement. Le nombre de cycles de régulation est illimité tant que l'utilisateur n'informe pas les moyens de saisie qu'il souhaite arrêter la climatisation, ou bien que cet utilisateur ne retire la clé de contact.

L'installation proposée peut être réalisée dans une version plus sophistiquée permettant de réguler également le taux d'humidité à l'intérieur de l'habitacle.

Dans cette version, on prévoit les deux capteurs de température 20 et 21 de la version simple décrite précédemment, mais on prévoit en plus deux capteurs d'humidité absolue, l'un 25 étant implanté à l'intérieur de l'habitacle de préférence à côté du premier capteur de température 20, et l'autre 26 étant implanté sur la face externe de la carrosserie de préférence à côté du second capteur de température 21. Ces deux capteurs sont connectés aux moyens de traitement 18 par des câbles 22 pouvant autoriser des liaisons bidirectionnelles.

Bien entendu, on pourrait envisager également une liaison sans fil entre les capteurs d'humidité et les moyens de traitement.

Chaque capteur d'humidité délivre une mesure Hj représentative de l'humidité absolue (H3, H4) du lieu où il est implanté, sous forme de signaux électriques, lesquels signaux sont traités de la même façon que les signaux de température décrits précédemment. On peut donc envisager de les mettre en forme avant de les utiliser.

Le mode de fonctionnement préféré de la version sophistiquée est donné ci-dessous.

On considère que la procédure de saisie et mémorisation de la température de consigne, décrite précédemment, est finie.

Les moyens de traitement 18, avertis par la réception de TC, interrogent alors les deux capteurs de température 20 et 21 et les deux capteurs d'humidité 25 et 26 que l'on appellera désormais troisième et quatrième capteurs. Cette interrogation est effectuée soit simultanément si l'installation est équipée d'une interface moyens de traitement-capteurs de type parallèle, soit en quatre temps si l'installation est équipée d'une interface de type série, soit encore en deux temps si l'on interroge d'abord les deux capteurs internes 20 et 25 puis les deux capteurs externes 21 et 26.

Les quatre mesures T1, T2, H3 et H4, issues respectivement des premier 20, second 21, troisième 25 et quatrième 26 capteurs, sont alors mémorisées dans la mémoire 24 des moyens de traitement après une éventuelle mise en forme, comme indiqué précédemment.

Cette mémoire 24 contient le seuil limite d'écart de température S1, mais également un seuil limite d'écart d'humidité S3 et un second seuil limite d'écart de température S2. S2 représente un seuil d'écart de température en deça duquel on considère que les températures interne et externe sont égales, et S3 représente un seuil d'écart d'humidité en deça duquel on considère que les humidités interne et externe sont égales.

Comme décrit précédemment, on peut envisager le remplacement de l'un au moins de ces deux seuils en équipant les moyens de traitement d'une entrée/sortie de programmation.

A réception de la mesure de température interne T1, les moyens de traitement 18 effectuent une première soustraction entre TC et T1, ce qui fournit un premier écart de température E1, qui est mémorisé dans la mémoire 24 à un endroit prédéfini. Puis les moyens de traitement 18 effectuent une première comparaison entre le premier seuil de température S1 et la valeur absolue de l'écart E1. Cette comparaison consiste également en une soustraction.

On effectue ensuite, ou simultanément, une seconde comparaison entre les températures interne T1 et externe T2, ainsi qu'une troisième comparaison entre les humidités interne H3 et externe H4.

Ces résultats sont mémorisés dans la mémoire 24. Puis, les moyens de traitement effectuent une quatrième comparaison entre la valeur absolue du résultat de la troisième comparaison et le seuil limite d'humidité S3, dont le résultat est également mémorisé dans 24.

Enfin, les moyens de traitement 18 effectuent une cinquième comparaison entre la valeur absolue du résultat de la seconde comparaison et le second seuil limite de température S2, dont le résultat est également stocké dans 24.

Toutes ces comparaison sont effectuées, de préférence, à l'aide de soustracteurs électroniques 23 à deux entrées et une sortie.

Une fois les cinq résultats des comparaisons calculés et stockés, les moyens de traitement 18 effectuent deux opérations EH et ET.

La première opération EH permet de déterminer l'énergie nécessaire pour abaisser l'humidité la plus forte des deux au niveau de celle la plus faible. Cette opération est donnée ci-dessous :

$$EH = Abs(H3 - H4) * 2500 \text{ [en J/Kg d'air]}$$

L'abréviation Abs représente la valeur absolue.

La seconde opération ET permet de déterminer l'énergie nécessaire pour abaisser la température la plus forte des deux au niveau de celle la plus faible. Cette opération est donnée ci-dessous :

$$ET = Abs(T1 - T2) * 1000 \text{ [en J/Kg d'air]}$$

L'abréviation Abs représente la valeur absolue.

Connaissant ET et EH, les moyens de traitement 18 effectuent une dernière et sixième comparaison entre ET et EH, puis stockent ce résultat dans 24. Cette sixième comparaison est également effectuée, de préférence, à l'aide d'un soustracteur électronique 23 à deux entrées et une sortie.

En fonction des résultats des première à sixième comparaisons, les moyens de traitement 18 sont aptes à adresser aux moyens de commande 16 un message leur demandant d'agir sur le volet d'entrée d'air 13, en positionnant celui-ci soit dans une position ouverte dans laquelle seul de l'air extérieur peut être traité par l'installation, soit dans une position fermée dans laquelle seul de l'air recirculé peut être traité par l'installation. L'ouverture du volet aura tendance à abaisser rapidement la température interne, ainsi que son taux d'humidité absolue, lorsque la température interne est plus élevée que la température externe.

Deux grands cas se présentent :

I) Si la condition "S1 - E1 < 0" est vérifiée, alors la différence de température entre la consigne TC et la température interne T1 est supérieure au premier seuil de température limite S1, ce qui veut dire que l'objectif de la régulation n'est pas atteint, la régulation est dans une phase dite d'amorçage. Quatre cas se présentent alors :

a) si les conditions "Abs(T1 - T2) - S2 < 0" et "Abs(H3 - H4) - S3 < 0" sont vérifiées, alors l'objectif de la régulation en humidité est atteint (H3 ≈ H4 et T1 ≈ T2), mais il faut faire converger la température interne T1 vers la température de consigne TC. En conséquence, quel que soit les autres résultats, il faut fermer le volet d'entrée d'air 13 afin de ne traiter dans l'installation que de l'air interne recirculé;

b) si les conditions "Abs(T1 - T2) - S2 > 0" et "Abs(H3 - H4) - S3 > 0" sont vérifiées, alors les objectifs de régulation en température et en humidité ne sont pas atteints, puisque les deux écarts sont respectivement plus grands que leur seuil limite (T1 ≠ T2 et H3 ≠ H4). Deux sous-cas se présentent :

b1) si la condition "T1 - T2 > 0" est vérifiée, alors, quel que soit les autres résultats, il faut ouvrir le volet d'entrée d'air 13 afin de ne traiter que de l'air extérieur plus froid que l'air interne recirculé;
b2) si la condition "T1 - T2 < 0" est vérifiée, alors il faut fermer le volet d'entrée d'air 13 afin de ne traiter que de l'air interne recirculé plus froid que l'air extérieur.

c) Si les conditions "Abs(T1 - T2) - S2 < 0" et "Abs(H3 - H4) - S3 > 0" sont vérifiées, alors T1 ≈ T2, mais H3 ≠ H4. Il existe un conflit de réglage qui est résolu par les deux sous-cas suivants :

c1) si la condition "ET - EH > 0" est vérifiée, alors on ferme le volet d'entrée d'air 13;
c2) si la condition "ET - EH < 0" est vérifiée, alors on ouvre le volet d'entrée d'air 13.

d) Si les conditions "Abs(T1 - T2) - S2 > 0" et "Abs(H3 - H4) - S3 < 0" sont vérifiées, alors H3 ≈ H4, mais T1 ≠ T2. Il existe un conflit de réglage qui est résolu par les deux sous-cas suivants :

d1) si la condition "ET - EH > 0" est vérifiée, alors on ouvre le volet d'entrée d'air 13;
d2) si la condition "ET - EH < 0" est vérifiée, alors on ferme le volet d'entrée d'air 13.

Dans ce premier grand cas, le message adressé par les moyens de traitement 18 aux moyens de commande 16, après traitement de la série de mesure, leur indique qu'il faut, d'une part, positionner le volet d'entrée d'air 13 dans la position ouverte ou fermée, et d'autre part, qu'il faut mettre en route la boucle froide, au maximum de ses possibilités, c'est à dire en demandant au compresseur de fonctionner à pression maximale.

II) Si la condition "S1 - E1 > 0" est vérifiée, alors la différence de température entre la consigne et la température interne est inférieure au seuil limite, ce qui veut dire que l'objectif de la régulation est atteint, la régulation est dans sa phase dite stabilisée. En conséquence, quel que soit le résultat des autres comparaisons, il faut fermer le volet d'entrée d'air 13.

Dans ce second grand cas, le message adressé par les moyens de traitement 18 aux moyens de commande 16 leur indique qu'il faut, d'une part, positionner le volet d'entrée d'air 13 dans la position fermée, et d'autre part, qu'il faut mettre en route la boucle froide, en utilisant une pression de compresseur calculée en fonction d'une table de correspondance qu'elle contient et de l'écart de température entre TC et T1.

Le fonctionnement de cette version sophistiquée après un cycle de commande de régulation et une période d'adaptation de durée prédéfinie, est identique à celui décrit précédemment pour la version simple.

Il est clair que dans la version sophistiquée, les deux capteurs internes et externes peuvent être réalisés sous la forme de couples de capteurs.

Par ailleurs, dans l'exemple de réalisation décrit, on utilise des soustracteurs pour réaliser les comparaisons, mais il est évident que des comparateurs de tension ou de courant à deux entrées et une sortie peuvent être envisagés.

De plus, dans les deux versions proposées, on peut prévoir un ou plusieurs comparateurs mis en série et/ou en parallèle pour effectuer l'ensemble des comparaisons. Selon le mode de conception choisi, un comparateur pourra être connecté par exemple à l'entrée des moyens de traitement qui reçoit les mesures de température et d'humidité et à un au moins un autre comparateur et/ou la mémoire 24, ou bien seulement à d'autres comparateurs, ou bien encore à d'autres comparateurs et à la sortie des moyens de traitement.

D'autre part, dans la description ci-dessus, on à décrit deux modes de réalisation dans lesquels le volet d'entrée ne pouvait prendre que deux positions extrêmes. Mais il est clair que l'on peut envisager une régulation qui prend en compte l'amplitude des écarts de température et/ou d'humidité calculés afin de positionner ledit volet suivant une pluralité de positions. Dans une telle hypothèse, on devrait prévoir une table de correspondance écarts/position du volet, mémorisée par les moyens de traitement ou de commande.

Enfin, d'autres procédures que celles décrites précédemment, qui aboutiraient à une mise en oeuvre des éléments de l'installation de climatisation proposée sensiblement identique, peuvent être envisagées.

**Revendications**

1.  Installation de climatisation, notamment d'habitacle de véhicule automobile, du type comprenant :

    -    un compresseur à pression réglable (5),
    -    un volet d'entrée d'air à position réglable (13), propre à gérer la proportion d'air recirculé et/ou d'air extérieur,
    -    un premier capteur (20) propre à délivrer une première mesure représentative de la température à l'intérieur de l'habitacle (T1),
    -    un second capteur (21) propre à délivrer un seconde mesure représentative de le température à l'extérieur de l'habitacle (T2),
    -    des moyens de saisie (19) propres à mémoriser une température de consigne (TC) saisie par un passager,
    -    des moyens de traitement (18) propres à calculer un écart de température (E1) entre la première mesure (T1) et la température de consigne saisie (TC), et
    -    des moyens de commande (16) propres à agir sur le compresseur (5) en fonction de la seconde mesure (T2) et de l'écart de température calculé (E1),

    les moyens de traitement (18) comprenant des moyens de mémorisation (24) propres à mémoriser au moins un premier seuil de température (S1), et des moyens de comparaison (23) propres à effectuer une première comparaison entre ledit premier seuil de température (S1) et la valeur absolue de l'écart de température calculé (E1), caractérisé en ce que les moyens de comparaison sont propres à effectuer une seconde comparaison entre les températures intérieure (T1) et extérieure (T2), et en ce que les moyens de commande (16) sont propres à positionner le volet d'entrée d'air (13) en fonction au moins de ces première et seconde comparaisons, ce qui permet de réguler la température à l'intérieur de l'habitacle.

2.  Installation selon la revendication 1, caractérisée en ce que le volet d'entrée d'air (13) peut prendre au moins deux positions choisies parmi une position ouverte dans laquelle seul l'air extérieur est autorisé à entrer dans ladite installation et une position fermée dans laquelle seul l'air recirculé est autorisé à entrer dans ladite installation.

3.  Installation selon l'une des revendications 1 et 2, caractérisée en ce que les première et seconde comparaisons consistent en une soustraction.

**4.** Installation selon l'une des revendications 1 à 3, caractérisée en ce que l'on prévoit également un troisième capteur (25) propre à délivrer une troisième mesure représentative de l'humidité absolue de l'air à l'intérieur de l'habitacle (H3), et un quatrième capteur (26) propre à délivrer une quatrième mesure représentative de l'humidité absolue de l'air à l'extérieur de l'habitacle (H4), et en ce que les moyens de comparaison (23) des moyens de traitement (18) sont aptes à effectuer une troisième comparaison entre les troisième (H3) et quatrième (H4) mesures.

**5.** Installation selon la revendication 4, caractérisée en ce que les moyens de mémorisation (24) des moyens de traitement (18) sont également propres à mémoriser un second seuil de température (S2) et un seuil d'humidité (S3),

en ce que les moyens de comparaison (23) sont aptes, après avoir effectué les première, seconde et troisième comparaisons, à effectuer une quatrième comparaison entre la valeur absolue du résultat de la troisième comparaison et ledit seuil d'humidité (S3), à effectuer une cinquième comparaison entre la valeur absolue du résultat de la seconde comparaison et ledit second seuil de température (S2), à effectuer au moins deux opérations sur respectivement les valeurs absolues des résultats des seconde et troisième comparaisons, et à effectuer une sixième comparaison entre les résultats des deux opérations, et

en ce que les moyens de commande (16) sont aptes à positionner le volet d'entrée d'air en fonction de ces première à sixième comparaisons, ce qui permet de réguler également le taux d'humidité à l'intérieur de l'habitacle.

**6.** Installation selon la revendication 5, caractérisée en ce que les troisième, quatrième, cinquième et sixième comparaisons consistent en une soustraction.

**7.** Installation selon l'une des revendication 4 à 6, caractérisée en ce que les moyens de traitement (18) sont aptes à interroger les premier (20), second (21), troisième (25) et quatrième (26) capteurs en même temps ou successivement.

**8.** Installation selon l'une des revendications 4 à 6, caractérisée en ce que les moyens de traitement (18) sont aptes à interroger les premier (20) et second (21) capteurs en un premier temps, puis les troisième (25) et quatrième (26) capteurs en un second temps.

**Patentansprüche**

**1.** Klimaanlage, insbesondere für einen Kraftfahrzeuginnenraum, vom Typ umfassend:

- einen druckeinstellbaren Kompressor (5),

- eine Luftzufuhrklappe (13) mit einstellbarer Position, die die Anteile an Umluft und/oder Außenluft steuern kann,

- einen ersten Sensor (20), der einen ersten Messwert (T1) bereitstellen kann, repräsentativ für die Temperatur im Inneren des Innenraumes,

- einen zweiten Sensor (21), der einen zweiten Messwert (T2) bereitstellen kann, repräsentativ für die Temperatur außerhalb des Innenraumes,

- eine Erfassungseinrichtung (19), die eine von einem Insassen eingestellte Solltemperatur (TC) speichern kann,

- eine Verarbeitungseinrichtung (18), die einen Temperaturunterschied (E1) zwischen dem ersten Messwert (T1) und der eingestellten Solltemperatur (TC) berechnen kann, und

- eine Steuereinrichtung (16), die abhängig von dem zweiten Messwert (T2) und dem errechneten Temperaturunterschied (E1) auf den Kompressor einwirkt,

wobei die Verarbeitungseinrichtung (18) eine Speichereinrichtung (24), die zumindest einen ersten Temperaturschwellenwert (S1) speichern kann, sowie eine Vergleichseinrichtung (23) umfasst, die einen ersten Vergleich zwischen dem ersten Temperaturschwellenwert (S1) und dem Absolutwert des errechneten Temperaturunterschiedes (E1) durchführen kann, dadurch gekennzeichnet, dass die Vergleichseinrichtung in der Lage ist, einen zweiten Vergleich zwischen der Innentemperatur (T1) und der Außentemperatur (T2) durchzuführen, und dass die Steuereinrichtung (16) in der Lage ist, die Luftzufuhrklappe (13) abhängig von zumindest den ersten und zweiten Vergleichen anordnen oder positionieren kann, wodurch eine Einstellung der Temperatur im Inneren des Innenraumes ermöglicht ist.

**2.** Anlage nach Anspruch 1, dadurch gekennzeichnet, dass die Luftzufuhrklappe (13) zumindest zwei Positionen einnehmen kann, ausgewählt unter einer offenen Position, in welcher lediglich Außenluft in die Anlage treten kann und einer geschlossenen Position, in welcher lediglich Umluft in die Anlage treten kann.

3. Anlage nach einem der Ansprüche 1 und 2, dadurch gekennzeichnet, dass die ersten und zweiten Vergleiche in einer Subtraktion bestehen.

4. Anlage nach einem der Ansprüche 1 bis 3, dadurch gekennzeichnet, dass ferner ein dritter Sensor (25) vorgesehen ist, der einen dritten Messwert (H3) bereitstellen kann, repräsentativ für die absolute Feuchte der Luft im Inneren des Innenraumes, sowie ein vierter Sensor (26), der einen vierten Messwert (H4) bereitstellen kann, repräsentativ für die absolute Feuchte der Luft außerhalb des Innenraumes, und dass die Vergleichseinrichtung (23) der Verarbeitungseinrichtung (18) in der Lage ist einen dritten Vergleich zwischen den dritten (H3) und vierten (H4) Messwerten durchzuführen.

5. Anlage nach Anspruch 4, dadurch gekennzeichnet, dass die Speichereinrichtung (24) der Verarbeitungseinrichtung (18) ebenfalls in der Lage ist einen zweiten Temperaturschwellenwert (S2) und einen Feuchteschwellenwert (S3) zu speichern, dass die Vergleichseinrichtung (23) in der Lage ist, nach Durchführung der ersten, zweiten und dritten Vergleiche, einen vierten Vergleich zwischen dem Absolutwert des Ergebnisses des dritten Vergleiches und dem Feuchteschwellenwert (S3) durchzuführen, einen fünften Vergleich zwischen dem Absolutwert des Ergebnisses des zweiten Vergleiches und dem zweiten Temperaturschwellenwert (S2) durchzuführen, zumindest zwei Operationen an jeweils den Absolutwerten der Ergebnisse der zweiten und dritten Vergleiche durchzuführen, sowie einen sechsten Vergleich zwischen den Ergebnissen der zwei Operationen durchzuführen, und dass die Steuereinrichtung (16) in der Lage ist, die Luftzufuhrklappe abhängig von den ersten bis sechsten Vergleichen zu positionieren, wodurch es ebenfalls oder zusätzlich ermöglicht ist, den Feuchtegehalt im Inneren des Innenraumes einzustellen.

6. Anlage nach Anspruch 5, dadurch gekennzeichnet, dass die dritten, vierten, fünften und sechsten Vergleiche in einer Subtraktion bestehen.

7. Anlage nach einem der Ansprüche 4 bis 6, dadurch gekennzeichnet, dass die Verarbeitungseinrichtung (18) in der Lage ist, die ersten (20), zweiten (21), dritten (25) und vierten (26) Sensoren gleichzeitig oder sukzessive abzufragen.

8. Anlage nach einem der Ansprüche 4 bis 6, dadurch gekennzeichnet, dass die Verarbeitungseinrichtung (18) in der Lage ist, die ersten (20) und zweiten (21) Sensoren in einer ersten Zeit, anschließend die dritten (25) und vierten (26) Sensoren in einer zweiten Zeit abzufragen.

**Claims**

1. An air conditioning installation, in particular for a motor vehicle cabin, of the type comprising:

   - an adjustable-pressure compressor (5),

   - an adjustable-position air inlet valve (13) for setting the proportion of recirculated air and/or air from outside,

   - a first sensor (20) for delivering a first measurement representing the temperature within the cabin (T1),

   - a second sensor (21) for delivering a second measurement representing the temperature outside the cabin (T2),

   - setting means (19) adapted to memorise a target temperature (TC) set by a passenger,

   - processing means (18) for calculating a difference in temperature (E1) between the first measurement (T1) and the target temperature (TC) which has been set, and

   - control means (16) adapted to act on the compressor (5) as a function of the second measurement (T2) and the calculated temperature difference (E1), the processing means (18) including memory means (24) for memorising at least one first temperature threshold (S1), and comparator means (23) for performing a first comparison between the said first temperature threshold (S1) and the absolute value of the calculated temperature difference (E1),

   characterised in that the comparator means are adapted to perform a second comparison between the inside temperature (T1) and the outside temperature (T2), and in that the control means (16) are adapted to set the position of the air inlet valve (13) as a function of at least the said first and second comparisons, whereby to adjust the temperature in the cabin.

2. An installation according to Claim 1, characterised in that the air inlet valve (13) is able to assume at least two positions selected from an open position in which only air from outside is able to enter the said installation, and a closed position in which only recirculated air is able to enter into the said installation.

**3.** An installation according to Claim 1 or Claim 2, characterised in that the first and second comparisons consist of a subtraction.

**4.** An installation according to one of Claims 1 to 3, characterised in that there is further provided a third sensor (25) for delivering a third measurement representing the absolute humidity of the air inside the cabin (H3), and a fourth sensor (26) for delivering a fourth measurement representing the absolute humidity of the air outside the cabin (H4), and in that the comparator means (23) of the processing means (18) are adapted to perform a third comparison between the third measurement (H3) and the fourth measurement (H4).

**5.** An installation according to Claim 4, characterised in that the memory means (24) of the processing means (18) are further adapted to memorise a second temperature threshold (S2) and a humidity threshold (S3), in that the comparator means (23) are adapted, after having performed the first, second and third comparisons, to perform a fourth comparison between the absolute value of the result of the third comparison and the said humidity threshold (S3), to perform a fifth comparison between the absolute value of the result of the second comparison and the said second temperature threshold (S2), to perform at least two operations on, respectively, the absolute values of the results of the second and third comparisons, and to perform a sixth comparison between the results of the two operations, and in that the control means (16) are adapted to position the air inlet valve as a function of the said first to sixth comparisons, whereby also to adjust the humidity level inside the cabin.

**6.** An installation according to Claim 5, characterised in that the third, fourth, fifth and sixth comparisons consist of a subtraction.

**7.** An installation according to one of Claims 4 to 6, characterised in that the processing means (18) are adapted to interrogate the first sensor (20), the second sensor (21), the third sensor (25) and the fourth sensor (26) at the same time or in succession.

**8.** An installation according to one of Claims 4 to 6, characterised in that the processing means (18) are adapted to interrogate the first sensor (20) and the second sensor (21) in a first operation, and then the third sensor (25) and the fourth sensor (26) in a second operation.